# EUROPÄISCHE PATENTSCHRIFT

(11) **EP 2 789 588 B1**
(45) Veröffentlichungstag und Bekanntmachung des Hinweises auf die Patenterteilung: **15.02.2017**
(21) Anmeldenummer: 14158176.9
(22) Anmeldetag: 06.03.2014
(51) Int. Cl.: C03B 35/26, C03B 23/045, C03B 23/043

(54) **Vorrichtung und Verfahren zum Führen eines Glasrohr- oder Glasstabstrangs mit von einer Kreisform abweichendem Querschnitt**
Device and method for conveying a glass tube or glass rod strand with a cross-section deviating from a circular form
Dispositif et procédé de transport d'un tube ou d'un tige de verre ayant une section transversale non circulaire

(30) Priorität: 12.04.2013 DE 102013103687
(43) Veröffentlichungstag der Anmeldung: 15.10.2014
(73) Patentinhaber: Schott AG, 55122 Mainz (DE)
(72) Erfinder: Pulz, Wolfgang, 95666 Mitterteich (DE); Fachtan, Walter, 95666 Themenreuth (DE); Duernhofer, Juergen, 95676 Wiesau (DE)
(74) Vertreter: 2K Patentanwälte Blasberg Kewitz & Reichel

(56) Entgegenhaltungen:
- DE-A1- 10 113 344
- JP-A- 2005 015 278
- JP-A- 2008 265 913

## Beschreibung

### GEBIET DER ERFINDUNG

Die vorliegende Erfindung betrifft allgemein eine Vorrichtung und ein Verfahren zum Fördern eines Glasrohr- oder Glasstabstrangs und betrifft insbesondere eine Vorrichtung und ein Verfahren zum Fördern eines Glasrohr- oder Glasstabstrangs mit von einer Kreisform abweichendem Querschnitt, insbesondere eines ovalen Glasrohr- oder Glasstabstrangs, sowie Verwendungen hiervon.

### HINTERGRUND DER ERFINDUNG

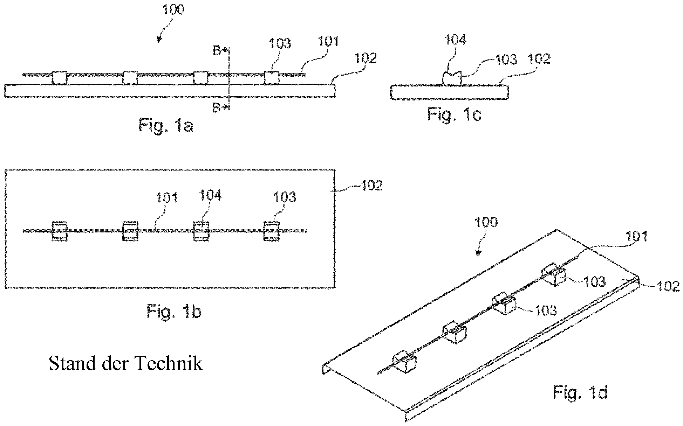

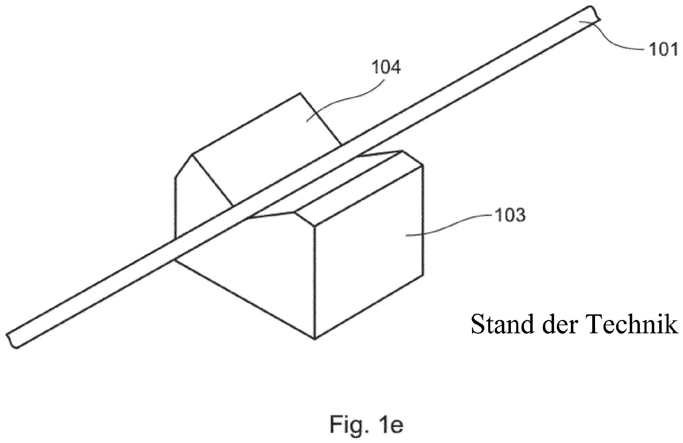

Die Figuren 1a-1d zeigen eine herkömmliche Vorrichtung 100 zum Fördern eines Glasrohr- oder Glasstabstrangs 101 mit kreisrundem Querschnitt. Auf einer Grundplatte 102, beispielsweise auch in Gestalt eines Maschinengestells, sind in Bewegungsrichtung des Glasrohr- oder Glasstabstrangs 101 nacheinander eine Mehrzahl von Auflage- und Führungselementen 103 aus Graphit angeordnet, die gemäß der Schnittansicht nach der Fig. 1c und der Perspektivansicht gemäß der Fig. 1c eine V-förmige Einkerbung 104 auf Ihrer Oberseite aufweisen. Der sich bewegende Glasrohr- oder Glasstabstrangs 101 liegt am Boden der V-förmigen Einkerbung 104 unmittelbar auf und wird so geführt.

Zur Reduzierung der Krümmung des Glasrohr- oder Glasstabstrangs 101, also einer Abweichung des Glasrohr- oder Glasstabstrangs 101 von einer Geraden in der Bewegungsrichtung des Glasrohr- oder Glasstabstrangs 101 wird dieser so gefördert, dass dieser kontinuierlich um dessen Längsachse rotiert. Dies kann beispielsweise durch zwei Ziehketten erreicht werden, welche mit Plättchen belegt sind, die in den Außenumfang des Glasrohr- oder Glasstabstrangs 101 eingreifen und diesen so mit sich ziehen. Wenn diese Ziehketten nicht exakt parallel zueinander eingestellt sind, kann so eine gleichmäßige Rotation des Glasrohr- oder Glasstabstrangs 101 während des Förderns entlang der Abzugsstrecke erzielt werden.

Weiter können entlang der Abzugsstrecke einer oder mehrere Brenner angeordnet sein, welche den sich bewegenden Glasrohr- oder Glasstabstrang 101 im Bereich der Transformationstemperatur des jeweiligen Glases erwärmen, um so die Krümmung des Glasrohr- oder Glasstabstrangs 101 weiter zu verbessern. Dabei kommen relativ große und breite Brenner zum Einsatz, die herkömmlich den gesamten Rohrquerschnitt erwärmen.

Diese Vorgehensweise ermöglicht nicht immer eine gewünschte Reduzierung der Krümmung von Glasrohr- oder Glasstabsträngen. Insbesondere ist diese Vorgehensweise nicht geeignet zum Fördern von Glasrohr- oder Glasstabsträngen mit von einer Kreisform abweichendem Querschnitt, insbesondere mit einem ovalen Querschnitt. Somit besteht weiterer Verbesserungsbedarf.

JP-A-2005015278 offenbart eine Vorrichtung zum Ziehen von Glasfasern aus einem Preform. Hierzu dient eine Abziehvorrichtung, mit der die heiße Preform hinreichend stark geklemmt wird, sodass diese in die Länge gezogen werden kann. Die Preform ist nicht bewegt. Führungselemente, die so verkippt sind, dass ein Glasstrang unmittelbar auf Kanten aufliegt und sich bewegt, sind nicht offenbart.

JP-A-2008265913 offenbart eine Anlage zur Vereinzelung von Glasrohren, die bereits zu vergleichsweise kurzen Rohren abgelängt sind, jedoch keinen kontinuierlichen Glasrohrstrang im Sinne der vorliegenden Anmeldung darstellen. In der Bewegungs- bzw. Längsrichtung verkippt angeordnete Führungselemente sind jedoch nicht offenbart.

DE-A-10113344 offenbart eine Führungsanordnung gemäß dem Oberbegriff des Anspruchs 1. Die Führungsanordnung umfasst eine Mehrzahl von Tragblöcken, die jeweils eine, dem Glasstrang zugewandte Tragfläche aufweisen, wobei der einzelne Tragblock im Bereich der Tragfläche aus einem porösen, gasdurchlässigen Membrankörper ausgebildet ist. Der Membrankörper ist an eine Druckgasquelle zum Fördern von Gas durch die Tragfläche hindurch angeschlossen austritt. Auf diese Weise wird ein Gaspolster ausgebildet, das angeblasenen Bereiche des Glasstranges weitgehend gleichmäßig beaufschlagt.

### ZUSAMMENFASSUNG DER ERFINDUNG

Aufgabe der vorliegenden Erfindung ist es, eine weiter verbesserte Führungsanordnung und ein weiter verbessertes Verfahren zum Führen eines Glasrohr- oder Glasstabstrangs mit von einer Kreisform abweichendem Querschnitt bereitzustellen, womit die vorgenannten Unzulänglichkeiten zumindest gemildert werden können und insbesondere die Krümmung des Glasrohr- oder Glasstabstrangs so weit als möglich reduziert werden kann.

Diese Aufgaben werden durch eine Führungsanordnung nach Anspruch 1, durch ein Verfahren nach Anspruch 12 sowie durch eine Verwendung nach Anspruch 14 gelöst. Weitere vorteilhafte Ausführungsformen sind Gegenstand der rückbezogenen Unteransprüche.

Gemäß einem ersten Gesichtspunkt betrifft die vorliegende Erfindung eine Führungsanordnung zum Führen eines Glasrohr- oder Glasstabstrangs mit von einer Kreisform abweichendem Querschnitt, insbesondere mit einem ovalen Querschnitt, wobei der Glasrohr- oder Glasstabstrang in seiner Längsrichtung bewegt ist, sich jedoch nicht um seine Längsachse dreht, mit einer Mehrzahl von Auflage- und Führungselementen, die in der Bewegungsrichtung des Glasrohr- oder Glasstabstrangs betrachtet nacheinander so angeordnet sind, dass der bewegte Glasrohr- oder Glasstabstrang auf diesen unmittelbar aufliegt und geführt wird. Erfindungsgemäß sind die Auflage- und Führungselemente in der Bewegungsrichtung um einem spitzen Kippwinkel verkippt angeordnet, sodass der bewegte Glasrohr- oder Glasstabstrang auf Kanten der Auflage- und Führungselemente unmittelbar aufliegt.

Es hat sich gezeigt, dass durch diese überraschend einfache Maßnahme eine wesentliche Ursache für die Krümmung des Glasrohr- oder Glasstabstrangs beseitigt werden kann, nämlich allzu große Temperaturunterschiede zwischen Unterseite bzw. Auflagefläche des Glasrohr- oder Glasstabstrangs und Nicht-Kontaktflächen des Glasrohr- oder Glasstabstrangs, also der Auflagefläche gegenüberliegenden bzw. angrenzenden Abschnitten des Glasrohr- oder Glasstabstrangs. Aufwändige Versuchsreihen der Erfinder haben nämlich gezeigt, dass die Auflage des Glasrohr- oder Glasstabstrangs auf den Auflage- und Führungselementen herkömmlich zu bedeutenden einseitigen Temperaturverlusten führt, die zu einer bedeutenden Verkrümmung des Glasrohr- oder Glasstabstrangs führen.

Durch das Verkippen der Auflage- und Führungselemente kann die Kontaktfläche zu dem Glasrohr- oder Glasstabstrang erheblich reduziert werden und somit die Wärmeabfuhr über die Kontaktfläche erheblich reduziert werden.

Dieser vorteilhafte Effekt ist bedeutender, wenn der Glasrohr- oder Glasstabstrang sich noch auf einer Temperatur oberhalb der Transformationstemperatur des jeweiligen Glases befindet, da sich Bearbeitungs- und Handhabungsfehler in diesem Temperaturbereich über die gesamte Handhabungskette bei der Prozessierung von Glasrohren oder Glasstäben durchziehen. Aufwändige Versuchsreihen der Erfinder haben insbesondere ergeben, dass sich mit der erfindungsgemäßen Führungsanordnung eine gewünschte Reduzierung der Krümmung von Glasrohren auch ohne großflächiges erneutes Erwärmen des Glasrohr- oder Glasstabstrangs erzielen lässt, also beispielsweise ohne breite Brenner oder Brennerleisten mit großer Flammengröße, die praktisch den gesamten Außenumfang (360°) des Glasrohr- oder Glasstabstrangs erneut erwärmen. Versuchsreihen der Erfinder haben insbesondere ergeben, dass bei der herkömmlichen Vorgehensweise mit großflächigem erneuten Erwärmen des Glasrohr- oder Glasstabstrangs aufgrund der vergleichsweise schlechten Wärmeleitung von Glas ein großer Teil der Temperaturunterschiede trotz großflächiger Erwärmung weiterhin erhalten bleiben, diese nicht effizient zur weiteren Reduzierung der Krümmung des Glasrohr- oder Glasstabstrangs wäre.

Um die Wärmeabfuhr über die Auflage- und Führungselemente noch weiter zu reduzieren, können diese gemäß einer weiteren Ausführungsform jeweils in einem nichtmetallischen Isolierklotz aus einem schlecht wärmeleitenden Material gehalten sein. Dieser kann beispielsweise aus einer schlecht wärmeleitenden Keramik gefertigt sein.

Um die Wärmeabfuhr über die Auflage- und Führungselemente noch weiter zu reduzieren, können diese gemäß einer weiteren Ausführungsform jeweils in einer Nut des zugeordneten Isolierklotzes gehalten sein, was sich insbesondere durch Klemmung oder Pressung erzielen lässt. Der Isolierklotz kann auch formschlüssig oder reibschlüssig in der Nut oder Aufnahme des jeweiligen Auflage- und Führungselements gehalten sein.

Gemäß einer weiteren Ausführungsform weist die Führungsanordnung zumindest eine Verstelleinheit auf, mittels der der Kippwinkel, um den die Auflage- und Führungselemente in der Bewegungsrichtung verkippt sind, eingestellt werden kann. Dies soll eine Verkippung und Verstellung in anderen Richtungen nicht ausdrücklich ausschließen. Jedenfalls soll eine Komponente der Verstellbewegung des Auflage- und Führungselements auch in der Bewegungsrichtung des Glasrohr- oder Glasstabstrangs vorhanden sein.

Die Verstellung kann dabei koordiniert für sämtliche Auflage- und Führungselemente erfolgen. Gemäß einer weiteren Ausführungsform erfolgt die Verstellung jedoch einzeln für die jeweiligen Auflage- und Führungselemente mittels jeweiliger Verstelleinheiten. Wegen der hohen vorherrschenden Temperaturen im Bereich der Auflage- und Führungselemente wird jedoch eine möglichst einfache Verstellung bevorzugt. Bevorzugt ist die vorgenannte Verstellung so ausgelegt, dass die Auflagepunkte des bewegten Glasrohr- oder Glasstabstrangs auf den Auflage- und Führungselementen das gleiche Höhenniveau oder vorbestimmte Höhenniveaus einnehmen, um die Krümmung des Glasrohr- oder Glasstabstrangs weiter zu reduzieren.

Eine solche Verstellung lässt sich gemäß einer weiteren Ausführungsform dadurch realisieren, dass die jeweilige Verstelleinheit einen Verstellkeil mit einer Schräge aufweist, auf der das zugeordnete Auflage- und Führungselement oder ein dieses haltender Isolierklotz unmittelbar gelagert ist, wobei der Kippwinkel durch Verschieben des zugeordneten Auflage- und Führungselements oder des dieses haltenden Isolierklotzes entlang der Schräge verstellbar ist. Ist ein geeigneter Kippwinkel und/oder eine geeignete Position und Lage des Auflage- und Führungselements erreicht, kann die so gewählte Position des Auflage- und Führungselements oder des dieses haltenden Isolierklotzes fixiert werden, beispielsweise mittels einfacher Klemmung oder Verschraubung.

Gemäß einer weiteren Ausführungsform weisen die Auflage- und Führungselemente jeweils zumindest eine Auflagefläche auf, die seitlich von zwei symmetrisch von dieser abragenden (beispielsweise senkrecht abragenden) Seitenwangen begrenzt ist, sodass eine Auflage- und Führungsnut mit im Wesentlichem rechteckförmigen Querschnitt ausgebildet ist. Durch diese einfache Maßnahme kann die jeweilige Auflagefläche im Bereich des jeweiligen Auflageund Führungselements minimiert werden. Die Seitenwangen halten die Wärme in der Auflage- und Führungsnut zurück und verhindern übermäßige Temperaturverluste durch Wärmestrahlung. Aufgrund der symmetrischen Ausgestaltung der Auflage- und Führungsnut kann weiterhin ein insgesamt vergleichsweise homogenes Temperaturprofil erzielt werden, das vorteilhaft zu einer weiteren Reduzierung der Krümmung des Glasrohr- oder Glasstabstrangs beiträgt.

Gemäß einer weiteren Ausführungsform weist die Führungsanordnung weiterhin einen Erwärmungsbereich auf, um den Glasrohr- oder Glasstabstrang gezielt lokal zu erwärmen, wobei der Erwärmungsbereich zumindest einen Gasbrenner aufweist, der so dimensioniert und betrieben ist, dass dieser den Glasrohr- oder Glasstabstrang im Wesentlichen nur von einer Seite desselben gezielt lokal erwärmt. Diese befindet sich auf der Seite der Auflagefläche des Glasrohr- oder Glasstabstrangs auf dem jeweiligen Auflage- und Führungselement, sodass Wärmeverluste des Glasrohr- oder Glasstabstrangs aufgrund des Kontakts mit dem Auflage- und Führungselement in einfacher Weise kompensiert werden können, ohne dass der gesamte Außenumfang des Glasrohr- oder Glasstabstrangs erneut aufgewärmt werden muss. Zweckmäßig ist der Gasbrenner somit unterhalb des sich bewegenden Glasrohr- oder Glasstabstrangs angeordnet.

Bevorzugt erzeugt der jeweilige Gasbrenner eine vergleichsweise schmale Verbrennungsflamme von nur wenigen Zentimetern Länge, die den Glasrohr- oder Glasstabstrang im Wesentlichen nur einseitig und nicht umlaufend erwärmt.

Gemäß einer weiteren Ausführungsform kann (können) der Abstand und/oder die Lage des Gasbrenners relativ zu dem bewegten Glasrohr- oder Glasstabstrang verändert werden, sodass der Glasrohr- oder Glasstabstrang noch präziser lokal erwärmt werden kann.

Zur weiteren Reduzierung der Krümmung des Glasrohr- oder Glasstabstrangs weist die Führungsanordnung gemäß einer weiteren Ausführungsform weiterhin zumindest ein Anlageelement auf, das seitlich an dem sich bewegenden Glasrohr- oder Glasstabstrang anliegt, um dessen Krümmung weiter zu reduzieren. Ein solches Anlageelement kann im Wesentlichen senkrecht zur Grundplatte der Vorrichtung ausgerichtet sein und reduziert oder verhindert so eine seitliche Verkrümmung des Glasrohr- oder Glasstabstrangs. In Abhängigkeit von der tatsächlich festgestellten oder im Normalbetrieb der Anlage zu erwartenden Krümmung des Glasrohr- oder Glasstabstrangs können auch mehrere solcher Anlageelemente seitlich vom Glasrohr- oder Glasstabstrang angeordnet sein, beispielsweise links oder rechts vom Glasrohr- oder Glasstabstrang.

Gemäß einer weiteren Ausführungsform weist die Führungsanordnung weiterhin eine Messeinrichtung auf, um die Krümmung des Glasrohr- oder Glasstabstrangs während des laufenden Betriebs, d.h. während der Herstellung des Glasrohr- oder Glasstabstrangs, zu messen. Die Messung kann dabei an dem sich noch bewegenden Glasrohr- oder Glasstabstrang und im noch erwärmten Zustand erfolgen, oder alternativ auch nach einem Ablängen von Glasrohren oder Glasstäben der gewünschten Länge an diesen ausgeführt werden. Die Führungsanordnung kann weiter eine zentrale Steuereinrichtung aufweisen, um Positionen und/oder Betriebsparameter von Komponenten der Vorrichtung so zu verändern oder zu steuern, dass die Krümmung des Glasrohr- oder Glasstabstrangs reduziert oder minimiert ist. Bei der vorgenannten Position kann es sich insbesondere um die Lage der jeweiligen Auflage- und Führungselemente und der diese jeweils haltenden Halteelemente relativ zu dem Glasrohr- oder Glasstabstrang handeln, oder um die jeweilige Verkippung der jeweiligen Auflage- und Führungselemente.

Bei den vorgenannten Betriebsparametern kann es sich insbesondere um die Verbrennungsmenge oder die Zusammensatzung des Verbrennungsgases des zumindest einen Brenners oder um die Abziehgeschwindigkeit des Glasrohr- oder Glasstabstrangs handeln.

Gemäß einem weiteren Gesichtspunkt der vorliegenden Erfindung wird ferner ein entsprechendes Verfahren zum Führen eines Glasrohr- oder Glasstabstrangs mit von einer Kreisform abweichendem Querschnitt bereitgestellt, insbesondere mit einem ovalen Querschnitt und insbesondere mittels einer Führungsanordnung wie vorstehend ausgeführt, wobei der Glasrohr- oder Glasstabstrang in seiner Längsrichtung bewegt ist, sich jedoch nicht um seine Längsachse dreht. Bei dem Verfahren liegt der bewegte Glasrohr- oder Glasstabstrang unmittelbar auf einer Mehrzahl von Auflage- und Führungselementen auf und wird von diesen geführt, wobei die Auflage- und Führungselemente in der Bewegungsrichtung des Glasrohr- oder Glasstabstrangs betrachtet nacheinander angeordnet sind. Erfindungsgemäß sind die Auflage- und Führungselemente in der Bewegungsrichtung verkippt angeordnet und liegt der sich bewegende Glasrohr- oder Glasstabstrang nur auf Kanten der Auflage- und Führungselemente unmittelbar auf, wie vorstehend beschrieben.

Gemäß einer weiteren Ausführungsform ist eine Messeinrichtung vorgesehen, welche die Krümmung des Glasrohr- oder Glasstabstrangs misst, sowie eine zentrale Steuereinrichtung, welche die vorgenannten Positionen und/oder Betriebsparameter von Komponenten der Vorrichtung so verändert, dass die Krümmung des Glasrohr- oder Glasstabstrangs reduziert oder minimiert ist.

Ein weiterer Gesichtspunkt der vorliegenden Erfindung betrifft ferner die Verwendung der Führungsanordnung, wie vorstehend beschrieben, oder eines Verfahrens, wie vorstehend beschrieben, zum Führen eines Glasrohr- oder Glasstabstrangs mit von einer Kreisform abweichendem Querschnitt, insbesondere mit einem ovalen Querschnitt.

### FIGURENÜBERSICHT

Nachfolgend wird die Erfindung in beispielhafter Weise und unter Bezugnahme auf die beigefügten Zeichnungen näher beschrieben werden, woraus sich weitere Merkmale, Vorteile und zu lösende Aufgaben werden. Es zeigen:
- Fig. 1a-1e: eine Glasrohr-Abzugstrecke gemäß dem Stand der Technik sowie Einzelheiten hiervon;
- Fig. 2a-2c: die Führung und Auflage eines Glasrohrstrangs gemäß der vorliegenden Erfindung; und
- Fig. 3a-3e: eine Glasrohr-Abzugstrecke gemäß der vorliegenden Erfindung sowie Einzelheiten hiervon.

In den Zeichnungen bezeichnen identische Bezugszeichen identische oder gleichwirkende Elemente oder Elementgruppen.

### AUSFÜHRLICHE BESCHREIBUNG VON AUSFÜHRUNGSBEISPIELEN

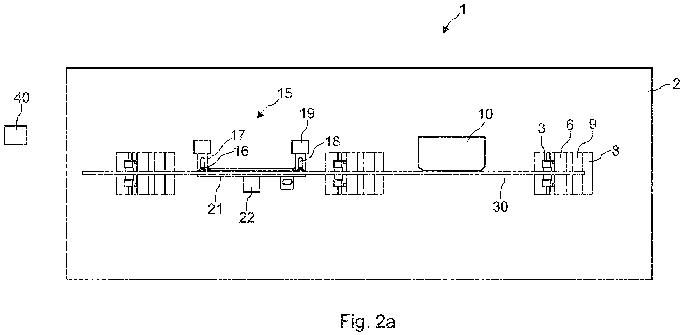

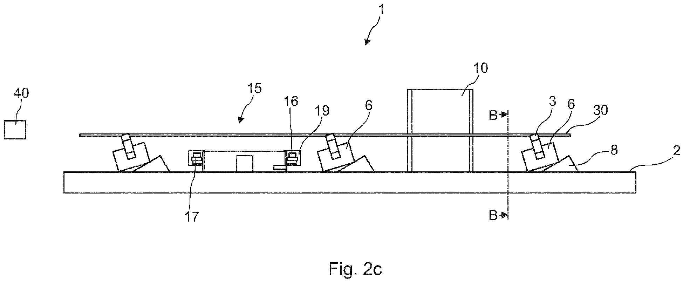

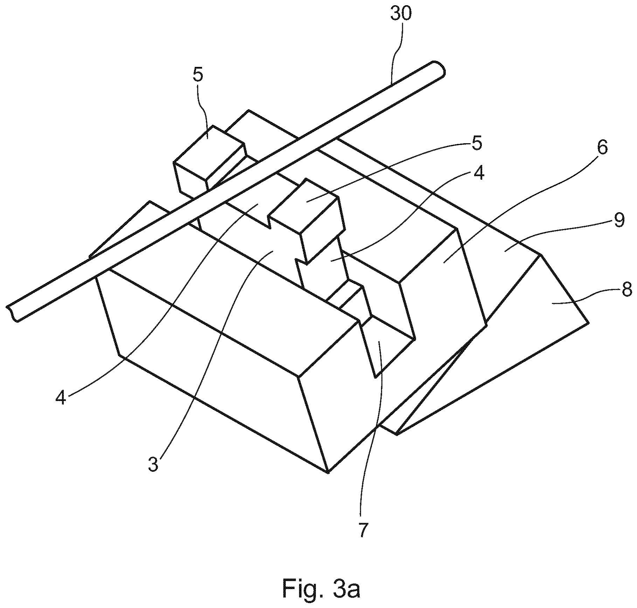

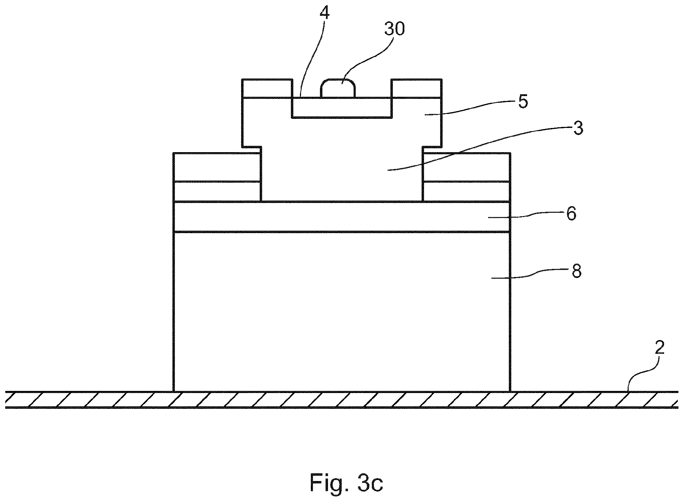

Nachfolgend wird anhand der Figuren 2a-2e eine Führungsanordnung zum Führen eines Glasrohr- oder Glasstabstrangs 30 mit einem von der Kreisform abweichenden Querschnitt beschrieben. Auf einer Grundplatte 2, beispielsweise auch in Gestalt eines Maschinengestells, sind in Bewegungsrichtung des Glasrohr- oder Glasstabstrangs 30 nacheinander eine Mehrzahl von Auflage- und Führungselementen 3 aus Graphit oder einem vergleichbaren hochtemperaturfesten und abriebarmen Material angeordnet, die vergrößert in der perspektivischen Darstellung gemäß der Fig. 3a dargestellt sind. Diese haben eine im Wesentlichen quadratische Grundform, wobei auf den Seitenkanten vertiefte Auflageflächen 4 ausgebildet sind, die symmetrisch von zwei im Wesentlichen senkrecht von den Auflageflächen 4 abragenden Seitenwangen 5 eingefasst sind, sodass zwischen den Seitenwangen 5 eine Nut mit im Wesentlichen rechteckförmigen Querschnitt ausgebildet ist. Das so ausgebildete Auflage- und Führungselement 3 ist in Richtung der Bewegungsrichtung bzw. Längsrichtung des Glasrohr- oder Glasstabstrangs 30 um einen spitzen Winkel verkippt, der beispielsweise im Bereich von 5° und 35°, bevorzugter im Bereich von 7,5° bis 20° und noch bevorzugter im Bereich von 10° bis 15° liegt.

Der sich bewegende Glasrohr- oder Glasstabstrang 30 liegt auf einer Kante des Auflage- und Führungselements 3 auf, somit in einem vergleichsweise kurzen Bereich, nicht aber über die gesamte Länge der von den Seitenwangen 5 gebildeten rechteckförmigen Einkerbung. Auf diese Weise können einseitige Wärmeverluste des Glasrohr- oder Glasstabstrangs 30 durch Wärmeleitung über das Auflage- und Führungselement 3 erheblich verringert werden. Die seitliche Führung des Glasrohr- oder Glasstabstrangs 30 kann durch zusätzlich vorgesehene seitliche Anlageelemente bewirkt werden, beispielsweise durch das mit dem Bezugszeichen 10 bezeichnete Anlageelement. In geringem Maße können dazu jedoch auch riefenförmige Abriebspuren auf den Kanten der Auflage- und Führungselemente 3 beitragen.

Da die vier Seiten des Auflage- und Führungselements 3 gemäß der Fig. 3a identisch ausgebildet sind, braucht im Falle einer übermäßigen Abnutzung (durch Abrieb oder dergleichen) des Auflage- und Führungselements 3 dieses einfach nur um einen Winkel von 90° oder ein ganzzahliges Vielfaches davon gedreht zu werden, um identische Auflage- und Führungsbedingungen zu realisieren.

Gemäß der Fig. 3a ist das Auflage- und Führungselement 3 in einer rechteckförmigen Nut 7 eines Halteelements 6 gehalten, das aus einem schlecht wärmeleitenden Material besteht, beispielsweise aus einer hochtemperaturfesten, jedoch schlecht wärmeleitenden Keramik. Dadurch werden einseitige Wärmeverluste des sich bewegenden Glasrohr- oder Glasstabstrangs 30 noch weiter reduziert. Das Auflage- und Führungselement 3 ist in der Nut 7 mittels nicht dargestellter Schrauben geklemmt gehalten, kann jedoch in der Nut 7 auch form- oder reibschlüssig fixiert sein.

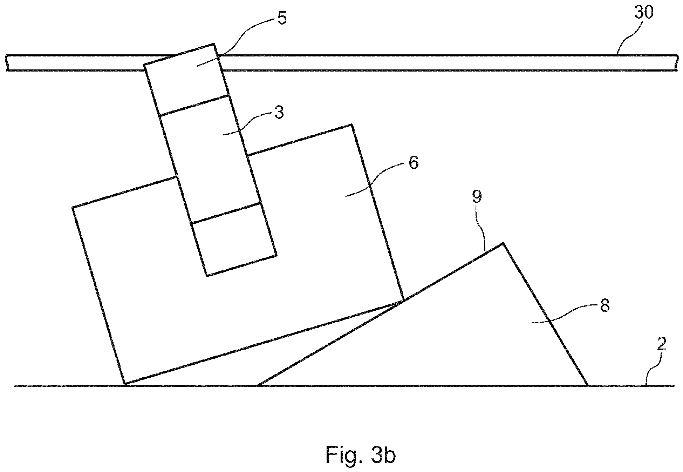

Gemäß der Fig. 3a ist das Halteelement 6 insgesamt rechteckförmig ausgebildet und liegt mit der hinteren Kante auf der oberen Schräge 9 eines Keils 8 auf, der gemäß der Fig. 2a in geeigneter Weise auf der Grundplatte 2 fixiert ist, beispielsweise auf einem Gestell der Vorrichtung 1. Wie man der Seitenansicht gemäß der Fig. 3b entnehmen kann, kann der Kippwinkel des Auflage- und Führungselements 3 durch Verschieben des Halteelements 6 entlang der Schräge 9 des Keils 8 verstellt werden. Gleichzeitig kann so die Höhenposition des Auflagepunkts des Glasrohr- oder Glasstabstrangs 30 in Bezug zu der Grundplatte 2 (vgl. Fig. 2a) präzise eingestellt werden, sodass sämtliche Auflagepunkte der Mehrzahl von Auflage- und Führungselementen 3 der Vorrichtung 1 fluchtend und auf der gleichen Höhe in Bezug zu der Grundplatte 2 angeordnet sind und so eine durch unterschiedliche Höhen der Auflagepunkte induzierte Krümmung des Glasrohr- oder Glasstabstrangs 30 vermieden werden kann.

Mittels der Mehrzahl von Auflage- und Führungselementen 3 wird der noch heiße Glasrohr- oder Glasstabstrang 30 entlang der Abzugstrecke der Vorrichtung 1 geführt. Der Glasrohr- oder Glasstabstrang 30 wird dabei mittels nicht dargestellter Antriebsrollen oder -ketten angetrieben.

Der Glasrohr- oder Glasstabstrang 30 weist dabei einen von der Kreisform abweichenden Querschnitt auf, d.h. mit einer Breitseite (insbesondere quer zur Bewegungsrichtung des Glasrohr- oder Glasstabstrangs 30 und parallel zur Oberseite der Grundplatte 2) und einer Schmalseite (insbesondere quer zur Bewegungsrichtung des Glasrohr- oder Glasstabstrangs 30 und senkrecht zur Oberseite der Grundplatte 2, also senkrecht zur vorgenannten Breitseite). Eine besonders stabile und zuverlässige Führung lässt sich dabei dann erzielen, wenn der Glasrohr- oder Glasstabstrang 30 mit der vorgenannten Breitseite auf den Kanten der Auflage- und Führungselemente 3 aufliegt und von diesen geführt wird. Der Glasrohr- oder Glasstabstrang 30, beispielsweise ein Ovalrohr, dreht sich während des Förderns entlang der Abzugstrecke nicht um seine Längsachse.

Während die Krümmung des Glasrohr- oder Glasstabstrangs 30 bei dieser Orientierung senkrecht zur Grundplatte 2 durch die vorgenannte exakt fluchtende Höhenpositionierung der Auflage- und Führungselemente 3 und deren Auflageflächen in Bezug zu der Grundplatte 2 reduziert oder minimiert werden kann, wird die Krümmung in der Richtung senkrecht dazu wie folgt reduziert oder minimiert.

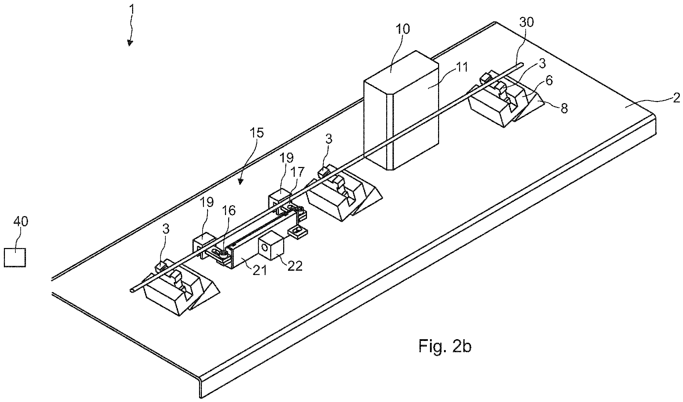

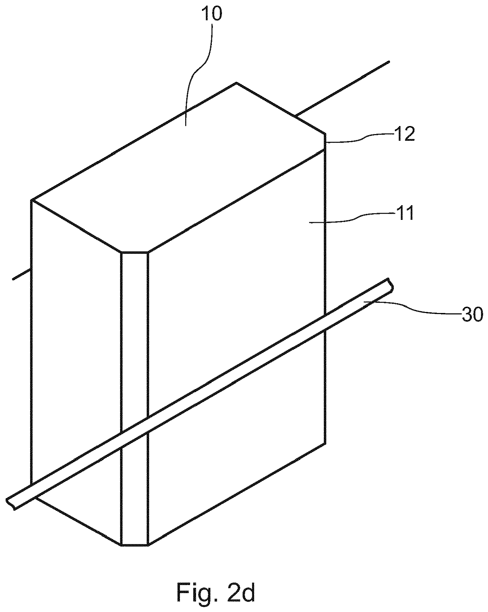

Zunächst ragt ein Anlageelement 10 (alternativ auch weitere nicht dargestellte Anlageelemente) im Wesentlichen senkrecht von der Grundplatte 2 ab, wobei gemäß der Fig. 2b die rechteckförmige Vorderseite 11 des Anlageelements 10 parallel zur Bewegungsrichtung des Glasrohr- oder Glasstabstrangs 30 ausgerichtet ist und das Anlageelement 10 so positioniert ist, dass der Glasrohr- oder Glasstabstrang 30 unmittelbar an der Vorderseite 11 anliegt und eine seitliche Verkrümmung (d.h. quer zur Bewegungsrichtung des Glasrohr- oder Glasstabstrangs 30 und parallel zur Ebene der Grundplatte 2) durch geeignete Ausrichtung des Anlageelements 10 reduziert oder minimiert werden kann. Wie man der vergrößerten Darstellung gemäß der Fig. 2d entnehmen kann, sind die Längskanten des Anlageelements 10 abgeschrägt ausgebildet. Durch einen definierten Wärmeentzug aufgrund der abgeschrägten Ausbildung der Längskanten des Anlageelements 10 kann die Krümmung des Glasrohr- oder Glasstabstrangs 30 weiter verhessert werden. Versuchsreihen der Erfinder haben gezeigt, dass ursächlich für diese weitere Verbesserung der Krümmung nicht das mechanische Ausrichten des Glasrohr- oder Glasstabstrangs 30 ist sondern der kontrolliertere und besser definierte Wärmeentzug.

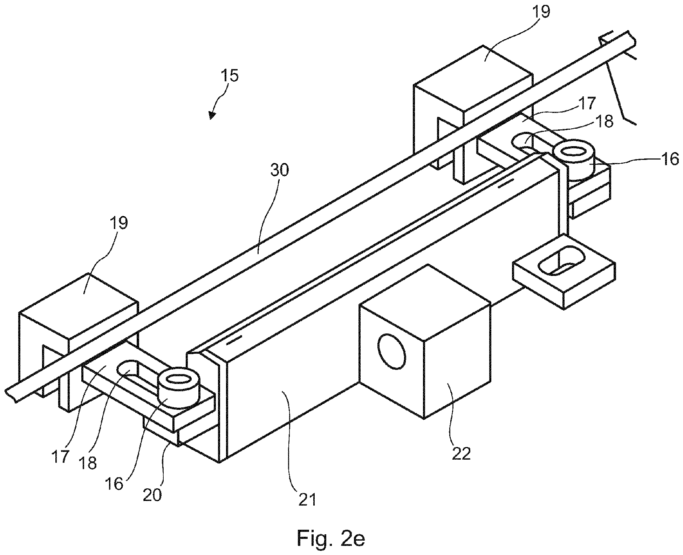

Zusätzlich kann eine gezielte lokale Erwärmung des Glasrohr- oder Glasstabstrangs 30 in dem mit dem Bezugszeichen 15 bezeichneten Bereich vorgesehen sein, der in einer vergrößerten perspektivischen Darstellung in der Fig. 2e abgebildet ist.

Gemäß der Fig. 2e ist ein im Ausführungsbeispiel länglich ausgebildeter Gasbrenner 21 mit einer vergleichsweise schmalen und kleinen Düsenöffnung unterhalb des Glasrohr- oder Glasstabstrangs 30 angeordnet. Der Gasbrenner 16 ist in Langlöchern 18 von Halteplatten 17 gehalten und kann in den Langlöchern 18 geeignet verschoben und fixiert werden, um eine präzise Positionierung relativ zu dem Glasrohr- oder Glasstabstrang 30 zu ermöglichen. Die Halteplatten 17 sind jeweils an einem Halteklotz 19 befestigt, der seinerseits verschieblich an der Grundplatte 2 angeordnet und mittels nicht abgebildeter Befestigungselemente fixiert ist. Die Halteklötzchen 19 können auch unmittelbar der vorgenannten Positionierung des Gasbrenners 21 dienen. Zur Verringerung von störenden Umgebungseinflüssen ist der Gasbrenner 21 durch eine Abdeckung (nicht gezeigt) oder auch eine (beispielsweise kastenförmige) Einhäusung gegen die Umgebung abgeschirmt.

Weil der Gasbrenner 21 unterhalb des Glasrohr- oder Glasstabstrangs 30 angeordnet sind, können die Wärmeverluste auf der Unterseite des Glasrohr- oder Glasstabstrangs 30 aufgrund dessen Auflage auf den Auflage- und Führungselementen 3 gezielt lokal kompensiert werden. Hierzu ist, anders als nach dem Stand der Technik, keine aufwändige und schwer kontrollierbare Erwärmung um den gesamten Umfang des Glasrohr- oder Glasstabstrangs 30 herum erforderlich. In Kombination mit der erfindungsgemäß reduzierten Wärmeabfuhr aufgrund der im Wesentlichen punktförmigen Auflage des Glasrohr- oder Glasstabstrangs 30 auf den Auflage- und Führungselementen 3 kann so eine unerwünschte Krümmung des Glasrohr- oder Glasstabstrangs 30 weiter reduziert oder minimiert werden.

Der oder die Erwärmungsbereich(e) kann (können) vor oder nach dem jeweiligen Anlageelement 10 angeordnet sein. Wenngleich in den Figuren nur ein seitliches Anlageelement 10 dargestellt ist, können grundsätzlich auch mehrere solche Anlageelemente in entsprechender Weise angeordnet sein. Die Wärmebehandlung des Glasrohr- oder Glasstabstrangs 30 in dem jeweiligen Erwärmungsbereich erfolgt bevorzugt oberhalb der Transformationstemperatur des jeweiligen Glases. Zweckmäßig hat der sich bewegende Glasrohr- oder Glasstabstrang 30 sich bis Erreichen des jeweiligen Erwärmungsbereichs noch nicht auf eine Temperatur unterhalb der Transformationstemperatur des jeweiligen Glases abgekühlt.

Gemäß der Fig. 2a ist stromabwärts der Abzugsstrecke 1 eine Messeinrichtung 40 angeordnet, welche die Krümmung des Glasrohr- oder Glasstabstrangs 30 insbesondere optisch misst. Die Messung kann an dem sich noch bewegenden Glasrohr- oder Glasstabstrang 30 erfolgen oder an bereits abgelängten (auch ruhenden) Glasrohren oder Glasstäben in einer nachgeordneten Handhabungsstation (beispielsweise Lager oder Verpackungsstation) an diesen vorgenommen werden. Anhand der gemessenen Krümmung können Positionen und/oder Betriebsparameter von Komponenten der vorstehend beschriebenen Vorrichtung 1 geeignet verändert und eingestellt werden, um die Krümmung des Glasrohr- oder Glasstabstrangs 30 in gewünschtem Maße zu reduzieren oder zu minimieren.

Zu diesem Zweck kann auch eine zentrale Steuereinrichtung (nicht dargestellt) vorgesehen sein, welche die Positionen und/oder Betriebsparameter von Komponenten der vorstehend beschriebenen Vorrichtung 1 geeignet steuert. Bei der vorgenannten Position kann es sich insbesondere um die Lage der jeweiligen Auflage- und Führungselemente und der diese jeweils haltenden Halteelemente relativ zu dem Glasrohr- oder Glasstabstrang handeln, oder um die jeweilige Verkippung der jeweiligen Auflage- und Führungselemente. Bei den vorgenannten Betriebsparametern kann es sich insbesondere um die Verbrennungsmenge oder die Zusammensetzung des Verbrennungsgases des zumindest einen Brenners oder um die Abziehgeschwindigkeit des Glasrohr- oder Glasstabstrangs handeln.

Da sich der Glasrohr- oder Glasstabstrang während des Transports entlang der vorgenannten Abzugsstrecke nicht um seine Längsachse dreht, kann so auch für Glasrohr- oder Glasstabstränge mit von der Kreisform abweichendem Querschnitt, insbesondere für Ovalrohre, eine permanente Überwachung des Innen- und Außendurchmessers realisiert werden, beispielsweise mittels einer berührungsfreien (insbesondere optischen) Messeinrichtung. Messwerte einer solchen Messeinrichtung können dann für eine Prozesssteuerung oder -regelung herangezogen werden, sodass mittels der vorstehend beschriebenen Vorgehensweise zum Fördern Glasrohr- oder Glasstabstränge mit von der Kreisform abweichendem Querschnitt mit höherer Präzision hergestellt werden können. Ergänzend können zur Überwachung der Eigenschaften des Glasrohr- oder Glasstabstrangs auch weitere Parameter überwacht und vermessen werden, beispielsweise die jeweilige Wandstärke an den beiden flachen Seiten eines Glasrohr- oder Glasstabstrangs oder abgelängten des Glasrohrs oder Glasstabs.

Wie dem Fachmann beim Studium der vorstehenden Beschreibung ersichtlich sein wird, eignen sich sämtliche hochtemperaturfesten und abriebfesten Materialien zur Ausbildung der Auflage- und Führungselemente. Bevorzugte Materialien sind insbesondere Graphit, beispielsweise Kohlenstoffgaphit FH42 der Fa. Schunk Kohlenstofftechnik GmbH. Während bei einer herkömmlichen Abzugsstrecke gemäß den Figuren 1a-1e Auflageflächen einer Länge von ca. 30cm erforderlich waren, lassen sich die Auflageflächen nach der vorliegenden Erfindung auf eine Länge von unter 5cm und sogar deutlich darunter verkürzen.

### Bezugszeichenliste

- 1: Glasrohr-Abzugstrecke
- 2: Grundplatte
- 3: Auflageelement
- 4: Auflagefläche
- 5: Seitenwangen
- 6: Halteelement
- 7: Nut
- 8: Keil
- 9: Schräge
- 10: Anlageelement (Kohle oder Graphit)
- 11: Anlagefläche
- 12: Abgeschrägte Kante

- 15: Erwärmungsbereich
- 16: Schraube
- 17: Halteplatte
- 18: Langloch
- 19: Halteklotz
- 20: Sockel
- 21: Gasbrenner / Heizeinrichtung
- 22: Halteklotz

- 30: Glasrohrstrang

- 40: Messeinrichtung

- 100: Glasrohr-Abzugstrecke
- 101: Glasrohr
- 102: Grundplatte
- 103: Auflageklötzchen
- 104: V-förmige Einkerbung

## Patentansprüche

1. Führungsanordnung zum Führen eines bewegten Glasrohr- oder Glasstabstrangs (30) mit von einer Kreisform abweichendem Querschnitt, insbesondere mit einem ovalen Querschnitt, wobei der Glasrohr- oder Glasstabstrang (30) in seiner Längsrichtung bewegt ist, sich jedoch nicht um seine Längsachse dreht, mit einer Mehrzahl von Auflage- und Führungselementen (3), die in der Bewegungsrichtung des Glasrohr- oder Glasstabstrangs (30) betrachtet nacheinander so angeordnet sind, dass der bewegte Glasrohr- oder Glasstabstrang (30) auf diesen unmittelbar aufliegt und geführt wird, **dadurch gekennzeichnet, dass** die Auflage- und Führungselemente (3) in der Bewegungsrichtung um einen spitzen Kippwinkel verkippt angeordnet sind, sodass der bewegte Glasrohr- oder Glasstabstrang (30) auf Kanten der Auflage- und Führungselemente unmittelbar aufliegt.

2. Führungsanordnung nach Anspruch 1, wobei die Auflage- und Führungselemente (3) jeweils in einem nichtmetallischen Isolierklotz (6) aus einem schlecht wärmeleitenden Material gehalten sind.

3. Führungsanordnung nach Anspruch 2, wobei die Auflage- und Führungselemente (3) jeweils in einer Nut (7) des zugeordneten Isolierklotzes (6) geklemmt gehalten sind.

4. Führungsanordnung nach einem der vorhergehenden Ansprüche, weiterhin umfassend zumindest eine Verstelleinheit (8), um den Kippwinkel, um den die Auflage- und Führungselemente (3) in der Bewegungsrichtung verkippt sind, einzustellen.

5. Führungsanordnung nach Anspruch 4, wobei die jeweilige Verstelleinheit einen Verstellkeil (8) mit einer Schräge (9) aufweist, auf der das zugeordnete Auflage- und Führungselement (3) oder ein dieses haltender Isolierklotz (6) unmittelbar gelagert ist, wobei der Kippwinkel durch Verschieben des zugeordneten Auflage- und Führungselements (3) oder des dieses haltenden Isolierklotzes (6) entlang der Schräge (9) verstellbar ist.

6. Führungsanordnung nach einem der vorhergehenden Ansprüche, wobei die Auflageund Führungselemente (3) jeweils zumindest eine Auflagefläche (4) aufweisen, die seitlich von zwei Seitenwangen (5) begrenzt ist, die symmetrisch von dieser abragen, sodass eine Auflage- und Führungsnut mit im einem Wesentlichem rechteckförmigen Querschnitt ausgebildet ist.

7. Führungsanordnung nach einem der vorhergenden Ansprüche, weiterhin umfassend einen Erwärmungsbereich (15), um den Glasrohr- oder Glasstabstrang (30) gezielt lokal zu erwärmen, wobei der Erwärmungsbereich zumindest einen Gasbrenner (16) aufweist, der so dimensioniert und betrieben ist, dass dieser den Glasrohr- oder Glasstabstrang (30) im Wesentlichen nur von einer Seite desselben gezielt lokal erwärmt.

8. Führungsanordnung nach Anspruch 7, wobei der Abstand und/oder die Lage des zumindest einen Gasbrenners (16) relativ zu dem bewegten Glasrohr- oder Glasstabstrang (30) veränderbar ist.

9. Führungsanordnung nach Anspruch 8, wobei der zumindest eine Gasbrenner (16) unterhalb des bewegten Glasrohr- oder Glasstabstrangs (30) angeordnet ist.

10. Führungsanordnung nach einem der vorhergenden Ansprüche, weiterhin umfassend zumindest ein Anlageelement (10), das seitlich an dem bewegten Glasrohr- oder Glasstabstrang (30) anliegt, um dessen Krümmung weiter zu reduzieren.

11. Führungsanordnung nach einem der vorhergenden Ansprüche, weiterhin umfassend eine Messeinrichtung (40), um die Krümmung des Glasrohr- oder Glasstabstrangs (30) zu messen, sowie eine zentrale Steuereinrichtung, um Positionen und/oder Betriebsparameter von Komponenten der Vorrichtung (1) zu verändern, sodass die Krümmung des Glasrohr- oder Glasstabstrangs (30) reduziert oder minimiert ist.

12. Verfahren zum Führen eines Glasrohr- oder Glasstabstrangs (30) mit von einer Kreisform abweichendem Querschnitt, insbesondere mit einem ovalen Querschnitt, wobei der Glasrohr- oder Glasstabstrang (30) in seiner Längsrichtung bewegt ist, sich jedoch nicht um seine Längsachse dreht, bei welchem Verfahren der bewegte Glasrohr- oder Glasstabstrang (30) unmittelbar auf einer Mehrzahl von Auflage- und Führungselementen (3) aufliegt und geführt wird, die in der Bewegungsrichtung des Glasrohr- oder Glasstabstrangs (30) betrachtet nacheinander angeordnet sind, **dadurch gekennzeichnet, dass** die Auflage- und Führungselemente (3) in der Bewegungsrichtung um einen spitzen Kippwinkel verkippt angeordnet sind und der bewegte Glasrohr- oder Glasstabstrang (30) auf Kanten der Auflage-und Führungselemente unmittelbar aufliegt.

13. Verfahren nach Anspruch 12, wobei eine Messeinrichtung (40) die Krümmung des Glasrohr- oder Glasstabstrangs (30) misst und eine zentrale Steuereinrichtung Positionen und/oder Betriebsparameter von Komponenten der Vorrichtung (1) so verändert, dass die Krümmung des Glasrohr- oder Glasstabstrangs (30) reduziert oder minimiert ist.

14. Verwendung der Führungsanordnung (1) nach einem der Ansprüche 1 bis 11 oder eines Verfahrens nach Anspruch 12 oder 13 zum Führen eines Glasrohr- oder Glasstabstrangs (30) mit von einer Kreisform abweichendem Querschnitt, insbesondere mit einem ovalen Querschnitt.

## Claims

1. A guiding assembly for guiding a moving glass tube strand or glass rod strand (30) having a cross-section that is different from a circular cross-section, particularly having an oval cross-section, wherein the glass tube strand or glass rod strand (30) is moved in its longitudinal direction but does not rotate about its longitudinal axis, comprising a plurality of support and guide members (3) that are arranged one after the other, if viewed in the direction of movement of the glass tube strand or glass rod strand (30), such that the moving glass tube strand or glass rod strand (30) is directly supported thereon and guided by them, **characterized in that** said support and guide members (3) are disposed tilted in said direction of movement so that the moving glass tube strand or glass rod strand (30) is directly supported on edges of the support and guide members.

2. The guiding assembly according to claim 1, wherein the support and guide members (3) are respectively held in a non-metallic insulating block (6) of a material having a poor thermal conductivity.

3. The guiding assembly according to claim 2, wherein the support and guide members (3) are respectively clamped in a groove (7) of the associated insulating block (6).

4. The guiding assembly according to any of the preceding claims, further comprising at least one adjusting unit (8) for adjusting the tilt angle about which the support and guide members (3) are tilted in the direction of movement.

5. The guiding assembly according to claim 4, wherein the respective adjusting unit comprises an adjusting wedge (8) having an inclined surface (9) on which the associated support and guide member (3) or an insulating block (6), which holds said associated support and guide member (3), is directly supported, wherein said tilt angle can be adjusted by displacing the associated support and guide member (3) or the insulating block (6), which holds said associated support and guide member (3), along the inclined surface (9).

6. The guiding assembly according to any of the preceding claims, wherein the support and guide members (3) respectively comprise at least one supporting surface (4) which is delimited laterally by two side walls (5) projecting symmetrically therefrom so that a support and guide groove is formed with a substantially rectangular cross-section.

7. The guiding assembly according to any of the preceding claims, further comprising a heating zone (15) to selectively heat the glass tube strand or glass rod strand (30) locally, wherein the heating zone comprises at least one gas burner (16) which is configured and operated such that it heats the glass tube strand or glass rod strand (30) substantially only from one side thereof.

8. The guiding assembly according to claim 7, wherein the distance and/or position of the at least one gas burner (16) relative to the moving glass tube strand or glass rod strand (30) can be varied.

9. The guiding assembly according to claim 8, wherein the at least one gas burner (16) is disposed below the moving glass tube strand or glass rod strand (30).

10. The guiding assembly according to any of the preceding claims, further comprising at least one contact member (10) that abuts the moving glass tube strand or glass rod strand (30) laterally for reducing its curvature.

11. The guiding assembly according to claim 1, further comprising a measuring device (40) for measuring the curvature of the glass tube strand or glass rod strand (30), and a central control unit for varying positions and/or operating parameters of components of the apparatus (1) such that the curvature of the glass tube strand or glass rod strand (30) is reduced or minimized.

12. A method for guiding a glass tube strand or glass rod strand (30) having a cross-section that is different from a circular cross-section, particularly having an oval cross-section, wherein the glass tube strand or glass rod strand (30) is moved in its longitudinal direction but does not rotate about its longitudinal axis, in which method the moving glass tube strand or glass rod strand (30) is supported directly on and guided by a plurality of support and guide members (3) that are arranged one after the other, if viewed in the direction of movement of the glass tube strand or glass rod strand (30), **characterized in that** said support and guide members (3) are disposed tilted in said direction of movement and that the moving glass tube strand or glass rod strand (30) is directly supported on edges of the support and guide members.

13. The method according to claim 12, wherein a measuring device (40) measures the curvature of the glass tube strand or glass rod strand (30) and a central control unit varies positions and/or operating parameters such that the curvature of the glass tube strand or glass rod strand (30) is reduced or minimized.

14. A use of the apparatus (1) according to any of claims 1 to 11 or of a method according to claim 12 or 13 for guiding a glass tube strand or glass rod strand (30) having a cross-section that is different from a circular cross-section, particularly having an oval cross-section.

## Revendications

1. Un dispositif de guidage pour le guidage d'un brin de tube de verre ou d'une tige de verre (30) ayant une section transversale non circulaire, en particulier une section transversale ovale, dans lequel le brin de tube de verre ou la tige de verre (30) est déplacé suivant sa direction longitudinale sans rotation autour de son axe longitudinal, comprenant une pluralité d'éléments de support et de guidage (3) qui sont disposés les uns à la suite des autres, lorsque examinés suivant la direction de déplacement du brin de tube de verre ou de la tige de verre (30), de telle manière que le brin de tube de verre ou la tige de verre (30) s'y est directement soutenu et guidé, **caractérisé en ce que** lesdits éléments de support et de guidage (3) sont disposés inclinés dans ladite direction de déplacement, de sorte que le brin de tube de verre ou la tige de verre (30) se trouve directement soutenu sur les bords des éléments de support et de guidage.

2. Le dispositif de guidage selon la revendication 1, dans lequel les éléments de support et de guidage (3) sont respectivement maintenus dans un bloc d'isolation non métallique (6) d'un matériau ayant une faible conductivité thermique.

3. Le dispositif de guidage selon la revendication 2, dans lequel les éléments de support et de guidage (3) sont respectivement maintenus serrés dans une rainure (7) du bloc d'isolation associé (6).

4. Le dispositif de guidage selon l'une des revendications précédentes, comprenant en outre au moins une unité de réglage (8) pour régler l'angle d'inclinaison autour duquel les éléments de support et de guidage (3) sont inclinés dans la direction du mouvement.

5. Le dispositif de guidage selon la revendication 4, dans lequel chaque unité de réglage respective comprend un coin de réglage (8) avec une surface inclinée (9) sur laquelle l'élément de support et de guidage associé (3) ou un bloc d'isolation (6), qui maintient ledit élément de support et de guidage (3), est directement soutenu, dans lequel ledit angle d'inclinaison peut être ajusté en déplaçant ledit élément de support et de guidage associé (3) ou le bloc d'isolation (6), qui maintient ledit élément de support et de guidage associé (3), le long de la surface inclinée (9).

6. Le dispositif de guidage selon l'une des revendications précédentes, dans lequel les éléments de support et de guidage (3) comportent respectivement au moins une surface de support (4) qui est délimité latéralement par deux parois latérales (5) faisant symétriquement saillie, de sorte à former une rainure de support et de guidage ayant une section substantiellement rectangulaire.

7. Le dispositif de guidage selon l'une des revendications précédentes, comprenant en outre une zone de chauffage (15), pour chauffer sélectivement et localement le brin de tube de verre ou la tige de verre (30), dans lequel la zone de chauffage comprend au moins un brûleur à gaz (16) qui est configuré et utilisé de telle manière à chauffer, substantiellement sur une de ses faces seulement, le brin de tube de verre ou la tige de verre (30).

8. Le dispositif de guidage selon la revendication 7, dans lequel la distance et / ou la position du brûleur à gaz (16) relativement au brin de tube de verre ou la tige de verre (30), est variable.

9. Le dispositif de guidage selon la revendication 8, dans lequel le brûleur à gaz (16) au moins est disposé sous le brin de tube de verre ou la tige de verre (30).

10. Le dispositif de guidage selon l'une des revendications précédentes, comprenant en outre au moins un élément de contact (10) venant buter latéralement le brin de tube de verre ou la tige de verre (30) pour en réduire la courbure.

11. Le dispositif de guidage selon la revendication 1, comprenant en outre un dispositif de mesure (40) pour mesurer la courbure du brin de tube de verre ou de la tige de verre (30), et un dispositif de commande centrale pour modifier les positions et / ou les paramètres de fonctionnement des composants du dispositif (1), en sorte que la courbure du le brin de tube de verre ou la tige de verre (30) puisse être réduite ou minimisée.

12. Un procédé de guidage d'un brin de tube de verre ou d'une tige de verre (30) ayant une section transversale non circulaire, en particulier une section transversale ovale, dans lequel le brin de tube de verre ou la tige de verre (30) est déplacé suivant sa direction longitudinale sans rotation autour de son axe longitudinal, dans lequel procédé le brin de tube de verre ou la tige de verre (30) se déplaçant est directement soutenu et guidé par une pluralité d'éléments de support et de guidage (3) qui sont disposés les uns à la suite des autres, lorsque examinés suivant la direction de déplacement du brin de tube de verre ou de la tige de verre (30), **caractérisé en ce que** lesdits éléments de support et de guidage (3) sont disposés inclinés dans ladite direction de déplacement et e ce que le brin de tube de verre ou la tige de verre (30) est directement soutenu sur les bords des éléments de support et de guidage.

13. Le procédé selon la revendication 12, dans lequel un dispositif de mesure (40) effectue la mesure de la courbure du brin de tube de verre ou de la tige de verre (30), et un dispositif de commande centrale vient modifier les positions et / ou les paramètres de fonctionnement de telle manière que la courbure du le brin de tube de verre ou la tige de verre (30) est réduite ou minimisée.

14. Une utilisation du dispositif (1) selon l'une quelconque des revendications 1 à 11 ou d'un procédé selon la revendication 12 ou 13 pour guider un brin de tube de verre ou une tige de verre (30) avec une section transversale différente d'une forme circulaire, en particulier avec une section transversale ovale.
